# FASCICULE DE BREVET EUROPEEN

(11) **EP 1 939 491 B1**
(45) Date de publication et mention de la délivrance du brevet: **04.04.2012**
(21) Numéro de dépôt: 07123732.5
(22) Date de dépôt: 19.12.2007
(51) Int. Cl.: F16H 35/10, F16H 57/02, F16D 9/06

(54) **Engrenage à protection de surcouple intégrée**
Getriebe mit integriertem Überlastschutz
Gear with built-in overtorque protection

(30) Priorité: 27.12.2006 FR 0655988
(43) Date de publication de la demande: 02.07.2008
(73) Titulaire: HISPANO SUIZA, 92700 Colombes (FR)
(72) Inventeur: Belhaj, Khalid, 92270 Bois Colombes (FR); Vassaux, Alain, 92800 Puteaux (FR)
(74) Mandataire: David, Daniel

(56) Documents cités:
- DE-A1- 2 944 843
- DE-C1- 4 240 142
- GB-A- 888 116

## Description

La présente invention concerne le domaine des engrenages, en particulier les engrenages présents dans des boîtes d'engrenages pour l'entraînement des machines auxiliaires dans une turbomachine.

Les engrenages sont utilisés dans toutes les branches de la mécanique pour transmettre des mouvements, de l'horlogerie jusqu'au réducteur de l'industrie lourde. Un engrenage est composé de deux pignons dentés, montés respectivement sur des arbres rotatifs. Un arbre menant entraîne en rotation un pignon, le pignon étant solidaire de l'arbre. Les dents du pignon menant engrènent avec les dents du pignon mené afin de transmettre le mouvement de rotation de l'arbre menant à l'arbre mené. Lorsque plus de deux pignons dentés sont engrenés, on parle de train d'engrenages.

Un train d'engrenages comprend une pluralité d'engrenages en série formant une chaîne cinématique. Un arbre moteur en amont de la chaîne cinématique entraîne en rotation un pignon dont il est solidaire. Des pignons du train d'engrenages, placés en aval de l'arbre moteur dans la chaîne cinématique, sont entraînés en rotation de proche en proche par la rotation de l'arbre moteur.

On désigne par la suite par pignons amont et aval, les pignons situés respectivement en amont et en aval dans la chaîne cinématique par rapport à un pignon donné, le pignon amont transmettant le mouvement de rotation au pignon donné, le pignon aval étant entraîné en rotation par le pignon donné.

Un train d'engrenages peut avantageusement entraîner en rotation une pluralité d'arbres à partir d'un arbre moteur, chaque arbre mené entraînant respectivement une machine. L'invention concerne en particulier un train d'engrenages présents dans les turboréacteurs pour l'entraînement des machines auxiliaires.

Dans un montage en série des engrenages, si un arbre mené est grippé ou immobilisé, le pignon solidaire de l'arbre ne peut plus tourner. Tous les pignons, de la chaîne cinématique, sont susceptibles d'être bloqués. Afin de permettre au train d'engrenage de continuer à fonctionner dans cette hypothèse, il est connu de prévoir des moyens fusibles.

Il existe dans l'art antérieur des engrenages formés de deux pignons montés sur des arbres munis de clavettes rectangulaires rapportées sur l'arbre. Les pignons comprennent respectivement des encoches rectangulaires au niveau de leur couronne interne correspondant avec la forme des clavettes. En fonctionnement, les pignons sont montés sur les arbres, les encoches maintenant les clavettes afin de solidariser le pignon à l'arbre.

Si un des arbres du train d'engrenages est grippé, le pignon, dont l'arbre est immobilisé, subit un surcouple généré par le pignon amont. Le surcouple fait céder la clavette désolidarisant le pignon par rapport à son arbre. Le pignon amont entraîne le pignon désolidarisé en rotation autour de l'arbre. La chaîne cinématique est maintenue mais pour une durée qui peut être relativement courte, car le pignon a tendance à se désaxer et à bouger transversalement et radialement, ceci pouvant aller jusqu'à l'arrêt de l'engrènement, les machines auxiliaires montées en aval n'étant alors plus alimentées. La perte de couple a une incidence sur les engrenages et en particulier sur les machines montées sur ces engrenages.

On connaît du document DE 42 40 142 C1 un engrenage générique comprenant un dispositif de sécurité, selon l'art antérieur, pour des cylindres d'imprimerie subissant un couple important.

Un des buts de l'invention est de permettre à un pignon, dont l'arbre est immobilisé, de transmettre le mouvement de rotation à un pignon aval afin de conserver le rendement de la transmission par engrenage.

A cet effet, la demanderesse propose un engrenage selon la revendication 1.

Avantageusement, si un arbre solidaire d'un pignon auxiliaire d'un train d'engrenages est grippé ou immobilisé, le pignon, subissant un couple important, se désolidarise de l'arbre grâce à l'élément sécable faisant office de « fusible ». Le palier de guidage, jusqu'ici en attente, devient actif. Ce palier permet de guider le pignon désolidarisé dans sa rotation autour de l'arbre. Malgré la défaillance, le rendement de l'engrenage est conservé.

Avantageusement encore, le palier a un faible encombrement et est léger. En effet, il est disposé dans le pignon et ne nécessite pas de moyens de guidage situés « hors » du pignon.

De préférence, l'élément sécable est monté de manière amovible entre le pignon et l'arbre.

De préférence encore, le palier de guidage appartient au groupe formé par un roulement à rouleaux, un roulement à billes et un palier à bagues.

De préférence toujours, le palier de guidage est un roulement à rouleaux de type NUP.

Selon un autre aspect de l'invention, une boîte d'engrenages auxiliaires comprend une pluralité d'engrenages, dans laquelle au moins un des engrenages est un engrenage selon l'invention.

De préférence, la boîte d'engrenages entraîne des machines auxiliaires dans une turbomachine.

Selon un autre aspect de l'invention, une turbomachine comprend une telle boîte d'engrenages.

L'invention sera mieux comprise à l'aide de la description suivante en référence au dessin annexé sur lequel :
- la figure 1 représente une vue en perspective de l'engrenage de l'invention;
- La figure 2 représente une vue en coupe III-III de l'engrenage de la figure 1 avec un roulement à rouleaux ; et
- La figure 3 représente une vue en perspective d'une autre forme de réalisation de l'invention avec un roulement à billes.

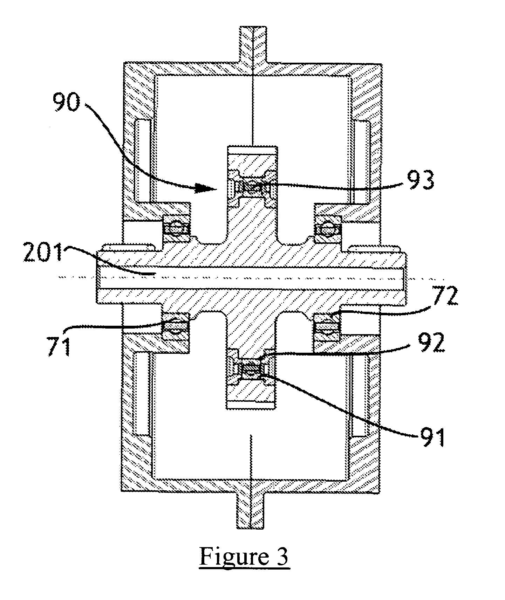

En référence à la figure 3, dans une forme de réalisation préférée de l'invention, un turboréacteur, non représenté, comprend une boîte d'engrenages 100. La boîte d'engrenages 100 a pour fonction d'entraîner des machines auxiliaires montées sur les arbres d'un train d'engrenages, supporté dans la boîte 100. Une telle boîte 100 est désignée généralement par le sigle AGB pour « Accessory Gear Box ».

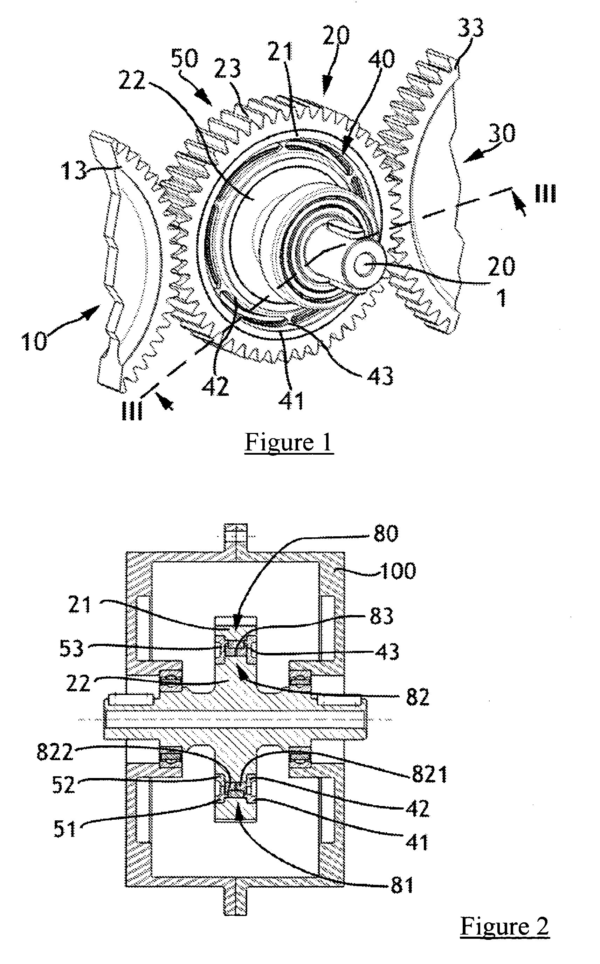

En référence à la figure 1, le train d'engrenages comprend ici trois pignons 10, 20, 30 munis respectivement de dents 13, 23, 33. Les pignons 10, 20, 30 sont disposés en série, formant une chaîne cinématique. Un arbre moteur entraîne le pignon 10 en rotation. Le mouvement de rotation est transmis au pignon 20 par les dents 13 engrenées avec les dents 23, les pignons 10, 20 formant un premier engrenage, les pignons 20, 30 formant un deuxième engrenage.

Le pignon 20 est monté solidaire d'un arbre rotatif 201. Ainsi, lorsque le pignon 20 est entraîné en rotation par le pignon amont 10, il entraîne lui-même l'arbre 201.

En référence à la figure 3, l'arbre 201 est supporté par des paliers 71,72, disposés respectivement de chaque côté du pignon 20, pour guider la rotation de l'arbre 201 dans la boîte 100. Les paliers 71, 72 se présentent ici sous la forme de roulements à billes.

En référence à la figure 2, l'arbre 201 comprend une portion en saillie radiale, formant un fût 22, autour duquel est montée une couronne cylindrique 21, pourvue de dents 23 sur sa surface extérieure. Un roulement à rouleaux 80 s'étend, de manière circonférentielle, entre le fût 22 et la couronne 21, permettant à la couronne 21 d'être entraînée en rotation autour du fût 22.

Le roulement 80 comprend une bague intérieure 82 supportant des rouleaux 83, disposés longitudinalement.

Les rouleaux 83 sont supportés extérieurement radialement par l'alésage intérieur de la couronne 21, formant une piste 81. Un roulement à rouleaux 80 offre, grâce au contact linéaire entre la piste 81, les rouleaux cylindriques 83 et la bague 82, une grande capacité de chargement radial du roulement et est ainsi adapté pour des vitesses de rotation élevées.

La bague 82 comporte deux parties, chacune comprenant un épaulement circonférentiel 821, 822 permettant le calage axial des rouleaux 83. Ce type de roulement à rouleaux 80, à double butée axiale, est désigné NUP.

Le roulement 80 est monté en attente dans le pignon 20, i.e. il n'est pas actif. La liaison, entre le fût 22 et le cylindre 21, est réalisée par deux disques de liaison 40, 50 disposés de chaque côté du pignon 20, transversalement par rapport à l'arbre 201, entre le fût 22 et la couronne 21. Les disques 40, 50 solidarisent le fût 22 au pignon 20, les disques étant avantageusement montés par frettage. Les disques 40, 50, formant les voiles du pignon 20, maintiennent la bague 82 du roulement 80 avec les rouleaux 83 de manière solidaire dans le pignon 20. Le roulement 80 ne peut pas se déplacer axialement dans le pignon 20.

En référence à la figure 1, le disque 40 comprend deux couronnes concentriques 41, 42, la couronne extérieure 41 étant reliée à la couronne intérieure 42 par des bras radiaux 43. La surface externe de la couronne 41 du disque 40 est en appui sur la surface interne de l'alésage de la couronne 21 du pignon 20, la surface interne de la couronne 42 étant en appui sur le fût 22.

Les bras 43 du disque 40 sont conformés de façon à avoir une portion « sécable » agencée pour céder pour une valeur de couple, entre le fût 22 et la couronne 21, supérieure à une valeur seuil déterminée. Le disque 50 est formé, de manière similaire au disque 40, et est disposé sur le pignon 20, sur le côté opposé au disque 40.

Lors d'un fonctionnement normal du train d'engrenages, le pignon amont 10 entraîne en rotation le pignon 20, le couple reçu étant inférieur à la valeur seuil. Le mouvement de rotation est transmis au pignon aval 30 par le pignon 20. La couronne 21 entraîne le fût 22 en rotation par l'intermédiaire des disques 40, 50. Le roulement à rouleaux 80 est en attente.

Si l'arbre 201 est grippé, le mouvement de rotation est perturbé. Un surcouple, excédant la valeur seuil, se créée entre le pignon 20 et le fût 22 et fait céder les bras 43, 53. La portion « fusible » de chaque bras 43, 53 cède et libère le pignon 20 en rotation autour du fût 22.

Les bras ayant cédé, le roulement à rouleaux 80 devient alors actif. Les rouleaux 83 entrent en rotation entre les couronnes 81, 82, permettant la rotation de la couronne 21 par rapport au fût 22. Les épaulements 821, 822 maintiennent axialement les rouleaux 83 et évitent que la couronne 21 ne soit entraînée en translation par rapport au fût 22.

Le roulement à rouleaux 80 permet de contraindre les mouvements axiaux et transversaux du pignon 20 et de n'autoriser que la rotation du pignon 20 autour du fût 22. Ainsi, le pignon 20, désolidarisé, n'entre pas en contact avec la boîte 100. Malgré la défaillance de l'arbre 201, le rendement de l'engrenage est optimisé et la chaîne cinématique est conservée.

Dans une autre forme de réalisation, en référence à la figure 3, un roulement de guidage à billes 90 s'étend, de manière circonférentielle, entre le fût 22 et la couronne 21 permettant à la couronne 21 d'être entraînée en rotation autour du fût 22.

Un roulement à billes 90 comprend une cage circonférentielle intérieure 92 et une cage circonférentielle extérieure 91 entre lesquelles sont disposées des billes 93. Le roulement 90 est monté en attente. La liaison, entre le fût 22 et le cylindre 21, est réalisée, de manière similaire à la forme de réalisation précédente, par frettage de deux disques de liaison 40, 50 entre le fût 22 et la couronne 21.

Dans une autre forme de réalisation non représentée, un palier à bagues s'étend, de manière circonférentielle, entre le fût 22 et la couronne 21, permettant à la couronne 21 d'être entraînée en rotation autour du fût 22. Le roulement à bagues comprend deux bagues concentriques réalisées en un matériau à faible coefficient de frottement, tel que du bronze ou du polytétrafluoroéthylène (PTFE), les bagues entrant en contact surfacique pour guider la couronne 21 autour du fût 22.

Les disques 40, 50, frettés entre la couronne 21 et le fût 22, sont facilement amovibles après rupture. Leur remplacement est rapide, simple et peu onéreux. Lorsqu'un arbre 201 est grippé, l'énergie fournie par le surcouple est absorbée par les disques 40, 50 et il n'est pas nécessaire de remplacer des pièces onéreuses telle que l'arbre 201 et la couronnes 21.

Au niveau de la turbomachine, l'invention permet à la boîte d'engrenages d'entraîner les machines auxiliaires malgré la défaillance d'un arbre du train d'engrenages.

## Revendications

1. Engrenage comprenant un pignon (20) solidaire d'un arbre (201) monté rotatif dans un support (100) par l'intermédiaire d'un élément sécable (40, 50), agencé pour désolidariser le pignon (20) de l'arbre (201), en cas de surcouple entre le pignon (20) et l'arbre (201), est un palier de guidage (80, 90), monté en attente entre le pignon (20) et l'arbre (201), étant agencé pour guider le pignon (20) en rotation autour de l'arbre (201), en cas de désolidarisation du pignon (20) de l'arbre (201), **caractérisé par le fait que** l'élément sécable (40, 50) est formé d'au moins un disque (40, 50) frété entre le pignon (20) et l'arbre (201), le disque (40, 50) comprenant une pluralité de bras radiaux (43, 53) sécables,

2. Engrenage selon la revendication 1, dans lequel ledit élément sécable (40, 50) est monté de manière amovible entre le pignon (20) et l'arbre (201).

3. Engrenage selon l'une des revendications 1 à 2, dans lequel le palier de guidage (80, 90) appartient au groupe formé par un roulement à rouleaux (80), un roulement à billes (90) et un palier à bagues.

4. Engrenage selon l'une des revendications 1 à 3, dans lequel le palier de guidage (80, 90) est un roulement à rouleaux de type NUP.

5. Boîte d'engrenages comprenant une pluralité d'engrenages, avec au moins un engrenage selon l'une des revendications 1 à 4.

6. Boîte d'engrenages, selon la revendication 5, entraînant des machines auxiliaires dans une turbomachine.

7. Turbomachine comprenant une boîte d'engrenages de machines auxiliaires selon la revendication 6.

## Claims

1. Gear comprising a pinion (20) which is connected to a shaft (201) which is rotatably mounted in a support (100) by means of a divisible element (40, 50) arranged to disconnect the pinion (20) from the shaft (201) in the event of an overtorque between the pinion (20) and the shaft (201), and a guide bearing (80, 90) which is mounted in an idle manner between the pinion (20) and the shaft (201) and arranged to guide the pinion (20) in rotation about the shaft (201) in the event of a disconnection of the pinion (20) from the shaft (201), **characterised in that** the divisible element (40, 50) is formed of at least one disc (40, 50) hooped between the pinion (20) and the shaft (201), the disc (40, 50) comprising a plurality of divisible radial arms (43, 53).

2. Gear according to claim 1, wherein said divisible element (40, 50) is removably mounted between the pinion (20) and the shaft (201).

3. Gear according to any one of claims 1 to 2, wherein the guide bearing (80, 90) belongs to the group formed by a roller bearing (80), a ball bearing (90) and a ring bearing.

4. Gear according to any one of claims 1 to 3, wherein the guide bearing (80, 90) is a roller bearing of the NUP type.

5. Gear box comprising a plurality of gears, having at least one gear according to any one of claims 1 to 4.

6. Gear box according to claim 5, driving auxiliary machines in a turbomachine.

7. Turbomachine comprising a gear box of auxiliary machines according to claim 6.

## Patentansprüche

1. Getrieberad, umfassend ein Zahnrad (20), das mit einer Welle (201) verbunden ist, die drehbar in einer Halterung (100) über ein teilbares Element (40, 50) montiert ist, das angeordnet ist, um das Zahnrad (20) bei einem Überdrehmoment zwischen dem Zahnrad (20) und der Welle (201) von der Welle (201) zu trennen, und ein Führungslager (80, 90), das wartend zwischen dem Zahnrad (20) und der Welle (201) montiert ist und angeordnet ist, um das Zahnrad (20) bei einer Trennung des Zahnrads (20) von der Welle (201) drehend um die Welle (201) herum zu führen, **dadurch gekennzeichnet, dass** das teilbare Element (40, 50) aus mindestens einer Scheibe (40, 50) gebildet ist, die zwischen dem Zahnrad (20) und der Welle (201) aufgezogen ist, wobei die Scheibe (40, 50) eine Vielzahl von teilbaren radialen Armen (43, 53) umfasst.

2. Getrieberad nach Anspruch 1, wobei das teilbare Element (40, 50) herausnehmbar zwischen dem Zahnrad (20) und der Welle (201) montiert ist.

3. Getrieberad nach einem der Ansprüche 1 bis 2, wobei das Führungslager (80, 90) der Gruppe zugehörig ist, die aus einem Rollenlager (80), einem Kugellager (90) und einem Ringlager gebildet ist.

4. Getrieberad nach einem der Ansprüche 1 bis 3, wobei das Führungslager (80, 90) ein NUP-Rollenlager ist.

5. Getriebe, umfassend eine Vielzahl von Getrieberädern, mit mindestens einem Getrieberad nach einem der Ansprüche 1 bis 4.

6. Getriebe nach Anspruch 5, das Nebenaggregate in einer Strömungsmaschine antreibt.

7. Strömungsmaschine, die ein Getriebe für Nebenaggregate nach Anspruch 6 umfasst.
